# EUROPÄISCHE PATENTSCHRIFT

(11) **EP 0 523 509 B1**
(45) Veröffentlichungstag und Bekanntmachung des Hinweises auf die Patenterteilung: **27.09.1995**
(21) Anmeldenummer: 92111451.8
(22) Anmeldetag: 06.07.1992
(51) Int. Cl.: B29C 53/62, B29C 65/54

(54) **Verfahren und Vorrichtung zum Herstellen von gewickelten Rohren**
Method and apparatus for making wound tubes
Procédé et dispositif pour la fabrication de tubes enroulés

(30) Priorität: 19.07.1991 DE 4123920
(43) Veröffentlichungstag der Anmeldung: 20.01.1993
(73) Patentinhaber: BAYER AG, 51368 Leverkusen (DE)
(72) Erfinder: Knipp, Ulrich, Dr., W-5060 Bergisch Gladbach 2 (DE); Vente, Paul, W-5090 Leverkusen 1 (DE); Pesch, Heinrich, Dipl.-Ing., W-4047 Dormagen 11 (DE); Post, Udo, W-5060 Bergisch Gladbach 2 (DE)

(56) Entgegenhaltungen:
- EP-A- 0 316 220
- FR-A- 2 071 401
- US-A- 3 607 492
- US-A- 4 011 354
- US-A- 4 351 682

## Beschreibung

Die Erfindung betrifft ein Verfahren und eine Vorrichtung zum Herstellen von gewickelten Rohren aus Kunststoff, wobei ein Band aus Kunststoff unter einem Wickelwinkel auf einen Zylinder aufgewickelt und die benachbarten Windungen durch Ausgießen der dazwischen befindlichen Fuge miteinander verbunden werden, wie aus DE-A-2 423 223 bekannt.

Gemäß diesem Stand der Technik werden vorgefertigte Bänder aus Kunststoff in verformungsfähigem Zustand auf einen Zylinder aufgewickelt und die Windungen miteinander verschweißt. Dabei weist der Zylinder eine Gummibeschichtung auf und wird vor dem Wickeln erwärmt, und das Rohr läßt sich nach dem Abkühlen abziehen. Es handelt sich hier also um ein diskontinuierliches Verfahren mit geringer Wirtschaftlichkeit.

Andererseits sind aus DE-A-2 141 797 ein Verfahren und eine Vorrichtung bekannt, wobei auf den Zylinder ein endloses Förderband aufgewickelt wird, auf diese Wicklung ein aushärtendes Harz aufgebracht und nach dem Aushärten des Harzes zum Rohr das Förderbandende abgezogen und zurückgeführt wird. Dieses Verfahren arbeitet kontinuierlich aber aufwendig, weil der Zylinder relativ lang sein muß und wegen der Rückführung des Förderbandes die Produktionsgeschwindigkeit begrenzt ist.

Es besteht die Aufgabe, die Technik zum Herstellen von gewickelten Kunststoffrohren durch Vereinfachung der Verfahrensweise und der Vorrichtung zu verbessern.

Gelöst wird diese Aufgabe dadurch, daß ein Polyurethan-Reaktionsgemisch zur Bildung eines Kunststoffes auf einen linear bewegten Trägerfolienstreifen aufgegossen wird und durch Aushärten das Band bildet und daß die benachbarten Windungen durch Ausgießen der Fuge mit einem Polyurethan-Reaktionsgemisch verbunden werden und das so gebildete Rohr von dem Zylinder kontinuierlich abgestreift wird.

Der besondere Vorteil des neuen Verfahrens liegt darin, daß es kontinuierlich durchführbar ist, daß das Band unmittelbar vor dem Aufwickeln herstellbar ist und daß das Band beim Aufwickeln auf den Zylinder überraschenderweise bereits so weit ausgehärtet ist, daß man gegen die letzte Windung Druck ausüben und das in der Bildung begriffene Rohr kontinuierlich vom Zylinder abschieben kann, was nicht vorhersehbar war, denn zwischen den Windungen und dem Zylinder besteht eine starke Reibung.

Es versteht sich, daß vor oder nach dem Aufbringen des Reaktionsgemisches auf die Trägerfolie Verstärkungsmaterialien in Form von Bändern, Folien, Geweben oder Verstärkungen aus geschnittenen Fasern oder Pulvern auf organischer oder anorganischer Basis zugeführt und in das Reaktionsgemisch eingebettet werden können. Es lassen sich auch Verstärkungs- oder Füllstoffe in Pulverform in eine der Reaktionskomponenten oder vor der Aufgabe des Reaktionsgemisches in dieses einmischen oder vorher auf die Trägerfolie aufschütten oder nach dem Aufbringen des Reaktionsgemisches auf die Trägerfolie auf das Reaktionsgemisch aufstreuen, in das es dann einsinkt. Als Füllstoffe eignen sich Kreide, Schiefermehl, Quarzmehl, Spat, Aluminiumhydroxid, Holzmehl, zerkleinerte Kunststoffe, evtl. auch Recycling-Material. Es können auch zusätzliche Bänder aus Kunststoffolie oder Metallfolie beim Gießen des Bandes untergelegt, eingelegt oder aufgelegt und mitverarbeitet werden. Bei eingelegten Folienbändern verwendet man zweckmäßigerweise solche mit einer Lochung, damit das Reaktionsgemisch hindurchtreten kann. Der Wickelwinkel, d.h. der Winkel zwischen dem zugeführten Band und der Achse des Zylinders, ist kleiner als 90°. Die Trägerfolie besteht vorzugsweise aus einem trennfreundlichen Kunststoff, wie Polyethylen, Polypropylen, Polytetrafluorethylen, oder aus einem mit einem Trennmittel, beispielsweise Silikon, beschichteten Papier. Auch eine Metallfolie läßt sich als Trägerfolie verwenden, wobei als Trennmittel beispielsweise Seifenlauge dienen kann. Aufgrund der Festigkeit dieser Metallfolie ist diese als Endlosband einsetzbar oder als endliches Band auch wiederverwertbar.

Anstelle eines Trägerfolienstreifens läßt sich auch ein endloses Transportband verwenden, das so lang sein muß, daß das aus dem Reaktionsgemisch entstehende Band beim Verlassen dieses Transportbandes bereits aureichende Festigkeit besitzt.

Das Ausfüllen der Fuge zwischen den Windungen erfolgt vorzugsweise mit dem gleichen Polyurethan-Reaktionsgemisch mittels einer zweiten Gießvorrichtung, und zwar vorzugsweise im Zenit des Zylinders bzw. der Wicklung.

Das Abstreifen des in der Fertigung begriffenen Rohres vom Zylinder erfolgt vorzugsweise durch in Abführrichtung entsprechend dem Wickelwinkel angestellte, gegen die zuletzt aufgebrachte Windung drückende Führungen. Diese Führungen bestehen beispielsweise aus Kufen oder Rollen.

Es war überraschend, daß das gerade erst durch Gießen erzeugte Kunststoffband sowie die in den Fingen aushärtende Masse bereits derartige Festigkeit besitzen, daß der für das Abstreifen des Rohres erforderliche Druck nicht schadet. Erforderlichenfalls lassen sich auch Abzugshilfen verwenden, welche an dem Teil des Rohres angreifen, der bereits den Zylinder verlassen hat.

Gemäß einer weiteren besonderen Durchführungsform des Verfahrens weist der Trägerfolienstreifen mindestens auf der der Abführrichtung abgewandten Seite einen über die Breite des Bandes hinausragenden Rand auf.

Dies hat den Vorteil, daß beim Wickeln eine Überlappung entsteht, so daß der Zylindermantel selbst von dem Trägerfolienstreifen völlig abgedeckt ist und die für die zum Verschließen der Fugen benötigte Gießmasse den Zylindermantel nicht verschmutzen kann.

Gemäß einer weiteren Ausgestaltung des Verfahrens wird der Trägerfolienstreifen seitlich trogartig hochgefaltet und das Polyurethan-Reaktionsgemisch in den so gebildeten Trog eingegossen, und vor dem Aufwickeln des Bandes wird der der Abführrichtung abgewandte Rand flachgelegt und der in Abführrichtung weisende Rand unter das gebildete Band geklappt.

Auf diese Weise erhält man ein Kunststoffband mit exakt ausgebildeten Rändern bei gleichbleibender Breite. Klappt man die Ränder der Trägerfolie mehr als 90° nach oben um, so kann man an dem sich bildenden Band eine Anfasung erreichen.

Alternativ ist es möglich, den der Abführrichtung zugewandten Rand abzutrennen, was insofern vorteilhaft ist, weil dann gegenüber dem Darunterklappen eine Folienstärke weniger vorhanden ist.

Vorzugsweise wird der Trägerfolienstreifen abgezogen, nachdem das Rohr den Zylinder verlassen hat.

Dies ist insbesondere dann wichtig, wenn der Trägerfolienstreifen bei der Verwendung des Rohres stören würde. Das Abziehen und Wegführen muß durch den Zylinder erfolgen, vorteilhafterweise durch eine hohl ausgebildete Achse.

Gemäß einer weiteren Ausgestaltung des neuen Verfahrens werden beim Ausgießen der Fuge mit Hinterschneidungen versehene Profile eingebracht.

Derartige Profile lassen sich beim Ausgießen der Fuge auch mittels konturgebender Hilfsmittel, beispielsweise einem mitlaufenden doppelten Keilriementrieb, herstellen.

Derartige Profile können als Distanzhalter oder Verankerung, beispielsweise für einen Rohrmantel, dienen. Sie bestehen beispielsweise aus Kunststoff, Metall oder steifen Fasergebilden oder der Fugenmasse selbst.

Es ist auch möglich, mehrere Bänder übereinander aufzuwickeln und die Fingen mit einem Polyurethan-Reaktionsgemisch auszugießen.

Dadurch erzielt man höhere Festigkeiten des Rohres. Solche Bänder können lagenweise entgegengesetzt gewickelt sein, wobei sich zwischen die Lagen der Bänder noch andere Lagen aufbringen lassen, beispielsweise eine Zwischenschicht aus einem Polyurethan-Reaktionsgemisch oder eine Polyurethan-Hartschaumstofflage zur Wärmedämmung. In beiden Fällen verwendet man dazu vorzugsweise entsprechende Reaktionsgemische, welche auf dem Zylinder aushärten. Es versteht sich, daß auch in solche Zwischenlagen Verstärkungseinlagen eingearbeitet werden können, beispielsweise Wicklungen aus Rovings oder Fasergeweben und dergleichen. Beim Aufbringen mehrerer Lagen von Bändern ist es meist notwendig, daß ab der zweiten Lage die Trägerfolienstreifen abgezogen werden.

Als Polyurethan-Gießmassen sind für diesen Zweck solche geeignet, wie sie im "Kunststoff-Handbuch", Band VII, Polyurethane, Carl-Hanser-Verlag (1966), auf Seite 241 in Tabelle 31, rechte Spalte, beschrieben sind. Gegebenenfalls ist das System durch Zugabe von 0,5 bis 2 g von Aminkatalysatoren vorteilhaft zu beschleunigen, z.B. durch Zugabe von N,N-Dimethylcyclohexamin.

Eine neue Vorrichtung zum Herstellen von gewickelten Rohren aus einem Band aus Kunststoff durch Verbinden der Windungen dieses Bandes geht aus von einem mit einem Drehantrieb versehenen Zylinder mit Abführvorrichtung für das Rohr.

Das Neue ist dahin zu sehen, daß diesem Zylinder eine Abwickelstation für einen Trägerfolienstreifen vorgeordnet und über dem Transportweg des Trägerfolienstreifens eine Gießvorrichtung für ein Polyurethan-Reaktionsgemisch angeordnet ist und daß über dem Zylinder eine weitere Gießvorrichtung zum Ausgießen der Fuge zwischen den Windungen vorgesehen ist.

Dadurch wird erreicht, daß das Band aus Kunststoff erst unmittelbar vor dem Wickelvorgang gefertigt zu werden braucht, wodurch Lagerhaltung und weitere Arbeitsgänge entfallen. Diese Fertigungsweise ist außerdem deshalb günstig, weil man auch Bänder verwenden kann, die, ist der Kunststoff völlig ausgehärtet, nicht mehr wickelfähig wären. Dies ist aber mit der neuen Vorrichtung möglich, weil man unter Berücksichtigung der Wickelgeschwindigkeit die Zeit, welche das Band für den Transport von der Aufgabestelle des Reaktionsgemisches bis zum Aufwickelpunkt benötigt, durch Wahl des Abstandes der Aufgabestelle vom Aufwickelpunkt so einstellen kann, daß es beim Aufwickeln noch ausreichend verformbar ist.

Eine alternative Ausführungsform der Vorrichtung ist gekennzeichnet durch einen feststehenden Zylinder mit einer Unterbrechung seines Mantels, wobei in der Unterbrechung eine auf die Windungen des Bandes einwirkende Antriebsrolle angeordnet ist, sowie durch eine dem Zylinder vorgeordnete Abwickelstation für einen Trägerfolienstreifen und eine Gießvorrichtung für ein Polyurethan-Reaktionsgemisch über dem Transportweg des Trägerfolienstreifens sowie durch eine weitere Gießvorrichtung über dem Zylinder zum Ausgießen der Fuge zwischen den Windungen.

Vorzugsweise sind bei beiden Ausführungsformen dem Zylinder als Abführvorrichtung Führungen für das aufzuwickelnde Band zugeordnet, welche unter dem Wickelwinkel angestellt sind.

Diese Führungen bestehen aus Kufen, Schienen oder Rollen und drücken das Band bzw. die Windungen und damit das in der Bildung begriffene Rohr vom Zylinder herab. Bei der zweiten Ausführungsform mit stationärem Zylinder sind diese Führungen weitgehend entlastet, wenn die Antriebswalzen so eingestellt sind, daß sie die Windungen sowohl radial als auch axial, d.h. unter dem Wickelwinkel, transportieren. Am bereits fertigen Rohr können weitere Abzugshilfen vorgesehen sein.

Es versteht sich, daß zum Abziehen des Trägerfolienstreifens, sofern dies gewünscht ist, eine Abzugsvorrichtung vorzusehen ist. Sie ist am Ende des Zylinders anzuordnen bzw. der abzuziehende Trägerfolienstreifen ist durch den Zylinder nach hinten wegzuführen.

Die Abwickelstation für die Trägerfolie sowie die Gießvorrichtung müssen auf dem durch den Wickelwinkel bestimmten Transportweg liegen.

Soweit der Trägerfolienstreifen seitlich trogartig hochgefaltet werden soll, sind entsprechende Faltvorrichtungen vorzusehen. Soweit der der Abzugsrichtung abgewandte Rand flachgelegt und der in Abzugsrichtung weisende Rand unter das gebildete Band geklappt werden sollen, sind hierfür Führungen vorzusehen.

Sofern der in Abführrichtung überstehende Rand abgetrennt werden soll, ist hierfür eine Schneidvorrichtung vorzusehen.

Sollen beim Ausgießen der Fuge mit Hinterschneidungen versehene Profile eingebracht werden, so ist eine Zuführvorrichtung für diese Profile vorzusehen.

Sollen mehrere Bänder zu einem Rohr gewickelt werden, so ist für jedes Band eine Abwickelstation für einen Trägerfolienstreifen sowie eine Gießvorrichtung vorzusehen. Ob man für die unterste Bandlage eine weitere Gießvorrichtung zum Ausgießen der Fuge zwischen den Windungen vorsieht oder eine Gießvorrichtung, welche die Fugen und Windungen vollflächig übergießt, hängt von dem gewünschten Rohraufbau ab. Sofern weitere Zwischenschichten, beispielsweise eine Polyurethan-Schaumstoffisolierschicht, aufgebracht werden sollen, sieht man eine entsprechende Auftragsvorrichtung für ein schäumfähiges Reaktionsgemisch über dem Zylinder vor. Handelt es sich dabei um eine Zwischenlage, so ist diese Aufgabevorrichtung vor der Aufgabevorrichtung bzw. der Zuführstelle für die nächste Lage eines Bandes vorzusehen, und zwar in solchem Abstand, daß das Reaktionsgemisch vorher zu einem tragenden Schaumstoff aushärten kann. Es handelt sich hierbei um besondere Ausgestaltungen der Vorrichtung.

In der Zeichnung sind die neuen Vorrichtungen jeweils in einem Ausführungsbeispiel rein schematisch dargestellt und nachstehend näher erläutert. Es zeigen:
- Fig. 1: eine erste Vorrichtung mit antreibbarem Zylinder in der Seitenansicht,
- Fig. 2: die Vorrichtung gemäß Fig. 1 in der Draufsicht,
- Fig. 3: einen Schnitt gemäß Linie A-B in Fig. 2,
- Fig. 4: einen Schnitt gemäß Linie C-D in Fig. 2,
- Fig. 5 bis 7: Schnitte durch besondere Ausführungsformen des Rohres,
- Fig. 8: eine zweite Ausführungsform mit ruhendem Zylinder in der Seitenansicht,
- Fig. 9: die Vorrichtung gemäß Fig. 8 in der Draufsicht,
- Fig. 10: eine dritte Ausführungsform mit ruhendem Zylinder in der Seitenansicht und
- Fig. 11: die Vorrichtung gemäß Fig. 10 in der Stirnansicht.

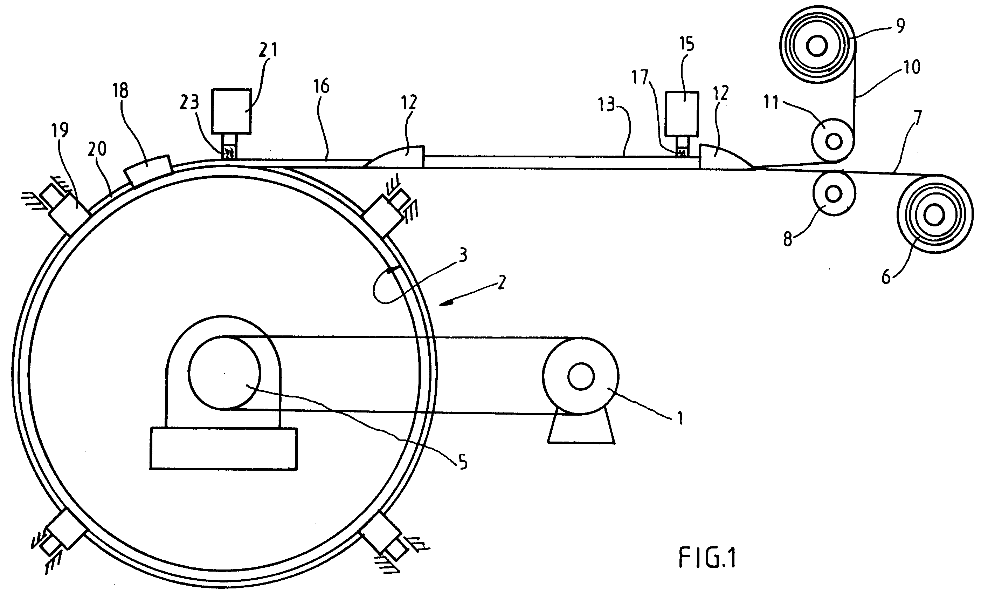

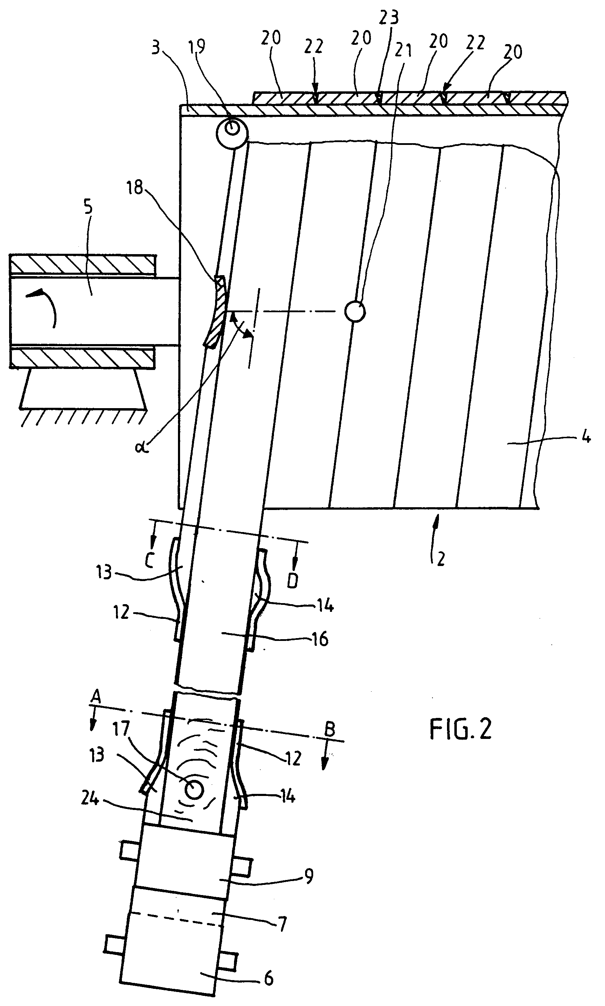

In Fig. 1 und 2 besteht die Vorrichtung aus einem mittels eines Drehantriebes 1 in Rotation versetzbaren, einseitig gelagerten Zylinder 2, dessen Mantel 3 den Innendurchmesser des zu fertigenden Rohres 4 aufweist. Unter dem Winkel α von 80° zur Achse 5 des Zylinders 2 ist eine Abwickelstation 6 für einen Trägerfolienstreifen 7, welcher über eine Umlenkrolle 8 geführt ist, angeordnet. Über dem Trägerfolienstreifen 7 sind eine zweite Abwickelstation 9 für ein Verstärkungsgewebe 10 sowie eine Umlenkrolle 11 vorgesehen. Eine Faltvorrichtung 12 dient zum Hochfalten der Ränder 13, 14 des Trägerfolienstreifens 7 sowie zur seitlichen Führung der hochgefalteten Ränder 13, 14 im Bereich einer darüber angeordneten Gießvorrichtung 15 für ein ein Band 16 bildendes Polyurethan-Reaktionsgemisch 17, wobei diese Faltvorrichtung 12 kurz vor dem Zylinder 2 so gestaltet ist, daß der der Abzugsseite des Rohres 4 abgewandte Rand 13 wieder flachgelegt wird und der Rand 14 um 180° unter das Band 16 geklappt wird und somit nicht mehr übersteht. Entsprechend dem Wickelwinkel α sind über dem Umfang des Zylindermantels 3 an einem nicht dargestellten Rahmengestell Führungen in Form von Kufen 18 und Rollen 19 angeordnet, welche gegen die erste Windung 20 anliegen. Über dem Zenit des Zylinders 2 ist eine weitere Gießvorrichtung 21 angeordnet, welche die Fuge 22 zwischen den Windungen 20 mit einem Polyurethan-Reaktionsgemisch 23 ausfüllt. Außerdem sind dem bereits gefertigten Rohr 4 nicht dargestellte Abzugshilfen zugeordnet. Die Abzugsvorrichtung für den Trägerfolienstreifen 7, welche am freien Ende des Zylinders 2 stationär mittels eines durch die Achse 5 hindurchreichenden Kragarmes vorgesehen sein müßte, ist der besseren Deutlichkeit halber nicht dargestellt.

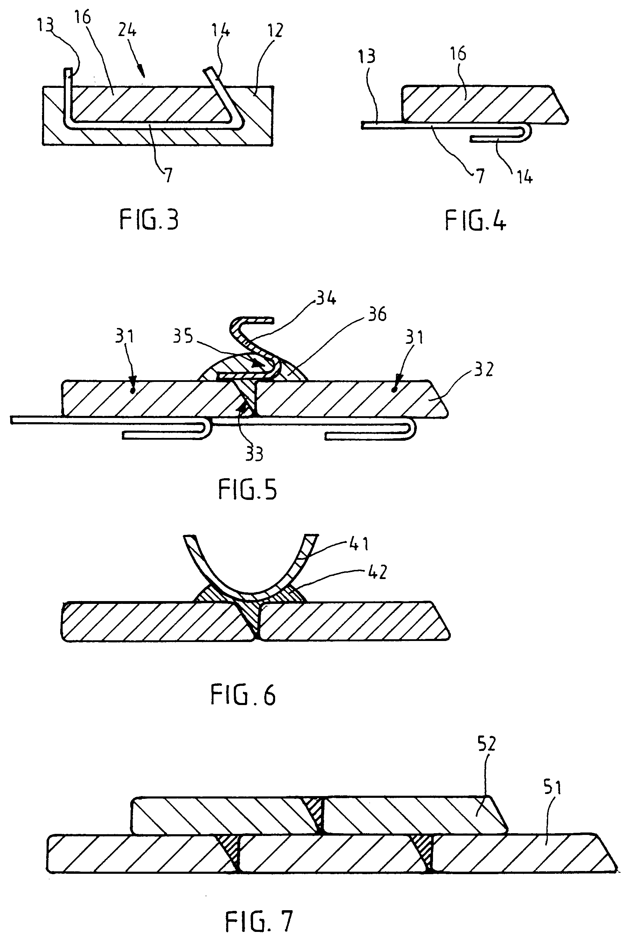

In Fig. 3 ist in der Faltvorrichtung 12 der Trägerfolienstreifen 7 mit seinen hochgefalteten Rändern 13 und 14 ersichtlich, welche einen Trog 24 bilden, in welchem das in der Verfestigung befindliche Band 16 liegt. Der Rand 14 ist weiter nach innen geklappt, damit das Band 16 eine Anfasung erhält.

In Fig. 4 ist das Band 16 bereits ausgehärtet, wobei der linke Rand 13 der Trägerfolie 7 über das Band 16 übersteht, während ihr rechter Rand 14 von der Unterseite des Bandes 16 teilweise abgezogen ist und um 180° daruntergeklappt ist.

In Fig. 5 sind Windungen 31 gezeigt, wobei das Band 32 einseitig angeschrägt ist. Über die gebildete Fuge 33 ist ein Profil 34 mit Hinterschneidungen 35 gelegt und in das Fugenmaterial 36 mit eingegossen.

In Fig. 6 ist ebenfalls ein Profil 41 in das Fugenmaterial 42 eingegossen. Das Profil 41 besitzt hier jedoch halbkreisförmigen Querschnitt.

In Fig.7 schließlich sind zwei Lagen von Bändern 51, 52 übereinander angeordnet.

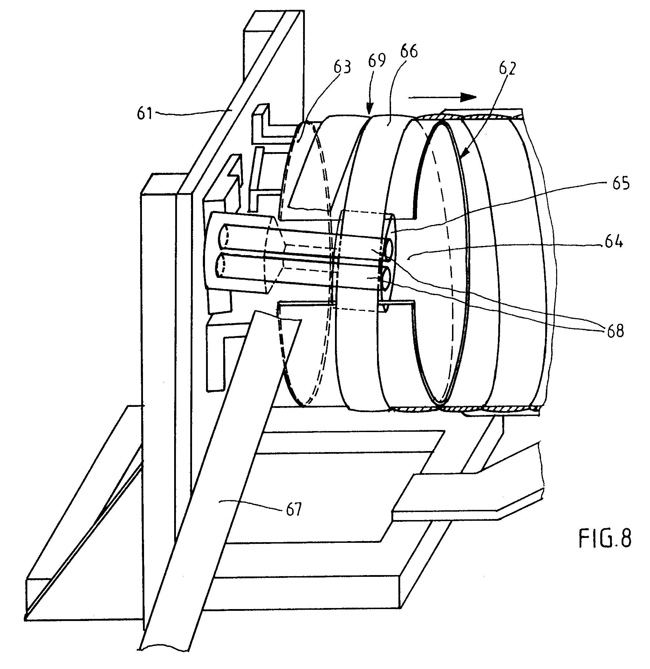

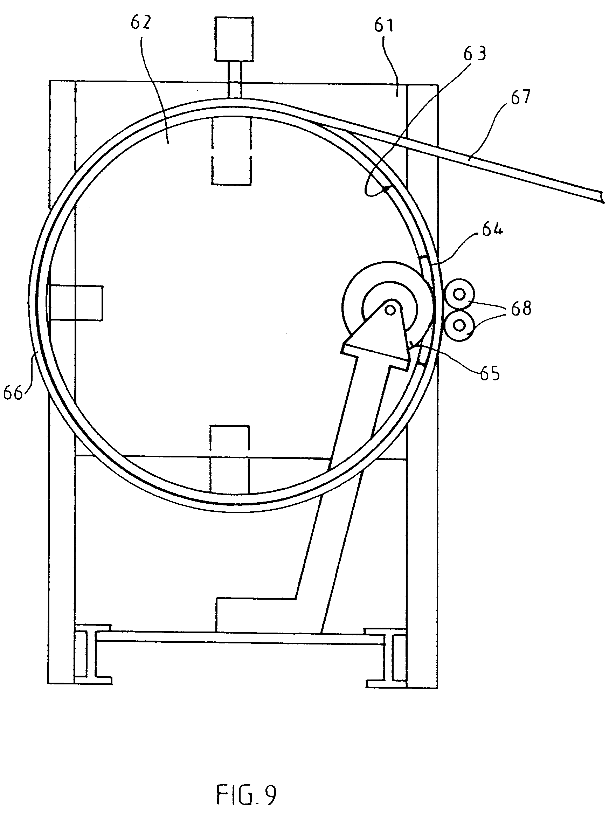

In den Fig. 8 und 9 ist an einem Stativ 61 ein Zylinder 62 als Stator befestigt. Der Mantel 63 des Zylinders 62 weist eine Unterbrechung 64 auf, in welcher eine Antriebsrolle 65 von innen gegen die Windungen 66 des Bandes 67 anliegt und diese um den Zylinder 62 rotieren läßt. Von außen drücken an dieser Stelle Gegendruckwalzen 68 gegen die Windungen 66. Die Abwickelstation für den Trägerfolienstreifen, die Faltvorrichtung und die Gießvorrichtung entsprechen jenen der Vorrichtung gemäß Fig. 1 und 2 und sind hier weggelassen worden. Die Fuge 69 zwischen den Windungen 66 wird mit der gleichen Gießmasse ausgegossen, aus der das Band 67 gefertigt ist.

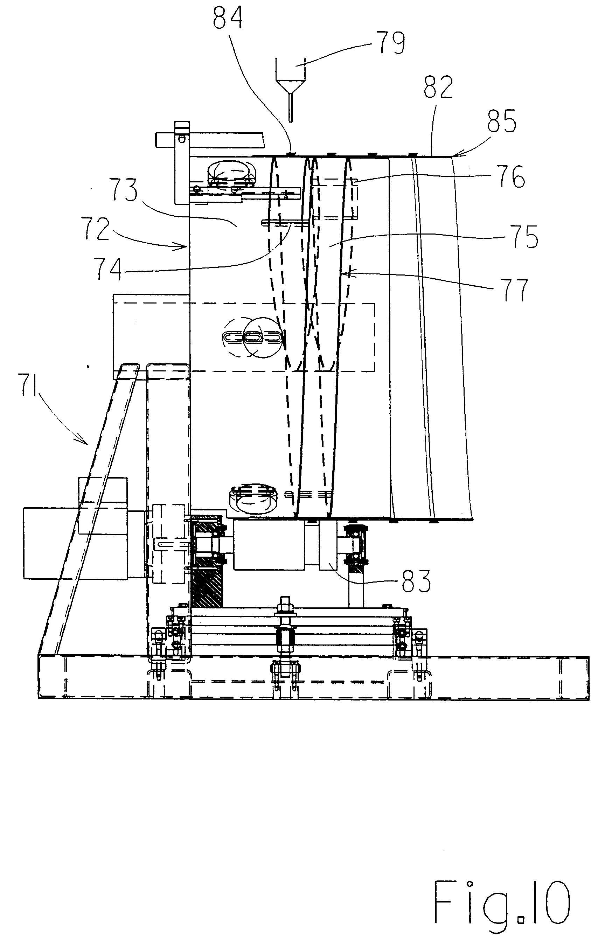

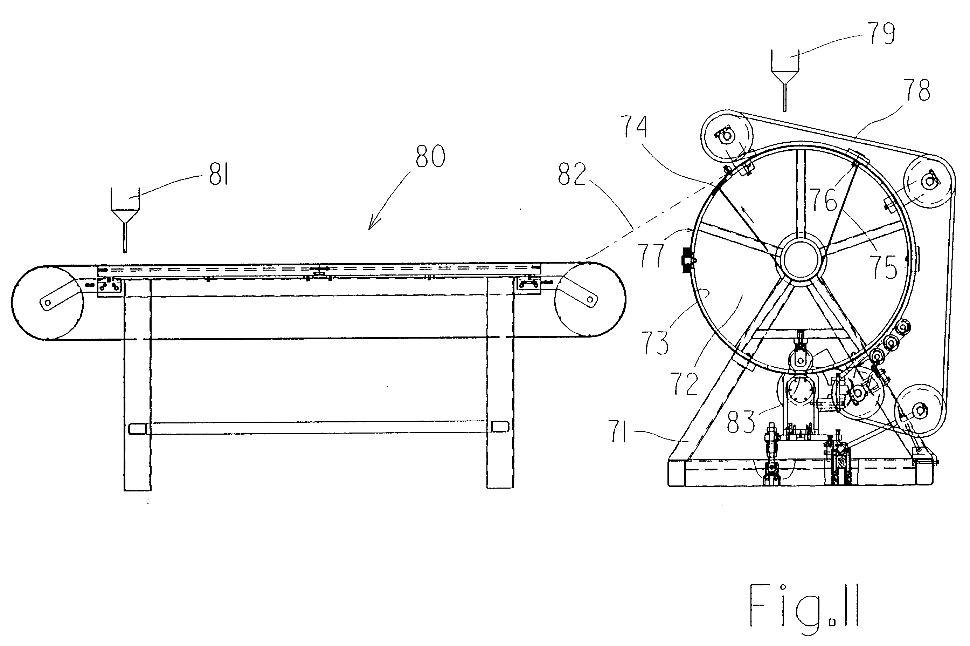

In den Fig. 10 und 11 ist an einem Stativ 71 ein Zylinder 72 als Stator befestigt. Der Mantel 73 des Zylinders 72 weist eine Öffnung 74 zum Ausführen eines endlosen, als Trennfolie dienenden Stahlbandes 75 aus dem Inneren und eine Öffnung 76 zum Wiedereinführen dieses Stahlbandes 75 in das Innere auf, wo es zur Öffnung 74 zurückgeführt wird. Dieses Stahlband 75 umschließt den Mantel 73 mit mehr als einer Windung 77. Über diesem Stahlband 75 ist eine Gießvorrichtung 79 für ein Polyurethan-Reaktionsgemisch angeordnet. Dem Zylinder 72 vorgeordnet ist ein endloses Transportband 80, über dem ebenfalls eine Polyurethan-Gießvorrichtung 81 angeordnet ist. Auf diesem angetriebenen Transportband 80 bildet sich das Polyurethan-Band 82, das auf das Stahlband 75 aufgebracht wird und durch die Walze 83 einen Antrieb erfährt. Die Fuge 84 zwischen den Windungen 85 wird mit der gleichen Masse ausgegossen, aus der das Band 82 gefertigt ist. Ein Doppelkeilriemenband 78 gibt die Kontur beim Vergießen der Fuge 84.

### Verfahrensbeispiel 1

Verwendet wird die Vorrichtung gemäß Fig. 1 und 2. Der Zylinder 2 von 1000 mm Durchmesser rotiert mit 1 min⁻¹. Dabei wird ihm unter einem Wickelwinkel von 86° das Band 16 zugeführt. Zum Erzeugen dieses Bandes wird von der Abwickelstation 6 die Trägerfolie 7, welche eine Polyethylenbeschichtung aufweist, abgewickelt und über eine Umlenkrolle 8 in Richtung des Zylinders 2 transportiert. Sie wird in die Faltvorrichtung 12 eingeführt, welche die Ränder 13 und 14 der Trägerfolie 7 hochfaltet, so daß ein Trog 24 entsteht. In diesen Trog 24 wird von einer Abwickelstation 9 ein Verstärkungsband 10 aus Glasfasergewebe über eine Umlenkrolle 11 zugeführt und eingelegt, und mittels einer Gießvorrichtung 15 wird darauf ein Polyurethan-Reaktionsgemisch aufgegossen. Geeignete Reaktionsgemische sind weiter hinten beschrieben. Das Reaktionsgemisch bildet das Band 16. Mittels der Faltvorrichtung werden nach genügender Verfestigung des Bandes der Rand 13 wieder flachgelegt und der Rand 14 um 180° unter das Band 16 geklappt. Beim Aufwickeln auf den Zylinder 2 legt sich die letzte Windung 20 auf den flachgelegten Rand 13 der vorhergehenden Windung 20. Der Aufwickelvorgang wird durch Führungen in Form von Kufen 18 und Rollen 19 unterstützt, welche gleichzeitig für den Vorschub des in der Fertigung begriffenen endlosen Rohres 4 in Achsrichtung des Zylinders 2 sorgen. Die beim Aufwickeln zwischen den Windungen 20 gebildete Fuge 22 wird mittels einer zweiten Gießvorrichtung 21 mit einem Polyurethan-Reaktiongemisch 23 ausgegossen. Nach Verlassen des Zylinders 2 wird die Trägerfolie 7 entfernt. Das Rohr 4 wird mittels zusätzlicher Abzugshilfen in Achsrichtung transportiert und der endlose Strang anschließend auf gewünschte Rohrlängen abgeschnitten.

### Verfahrensbeispiel 2

Verwendet wird die Vorrichtung gemäß Fig. 8 und 9.

Die Erzeugung und Führung des Kunststoffbandes 67 erfolgt wie im Verfahrensbeispiel 1 bzw. bei der Vorrichtung gemäß Fig. 1 und 2. Die um den Mantel 63 des Zylinders 62 liegenden Windungen 66 werden hier von der Antriebsrolle 65 angetrieben, so daß das in der Fertigung begriffene Rohr um den ruhenden Zylinder 62 rotiert, wobei durch Gleitmittel die Reibung zwischen dem Mantel 63 und den Windungen 66 herabgesetzt wird. Auch das Vergießen der Fuge 69 zwischen den Windungen 66 erfolgt gemäß Verfahrensbeispiel 1 bzw. gemäß Vorrichtung nach Fig. 1 und 2.

Beispiele für die zur Herstellung des Bandes und zum Ausgießen der Fuge zu verwendenden Polyurethan-Reaktionsgemische:

### Beispiel 1

### Polyol I

Polyolgemisch der OH-Zahl ca. 355 und einer Viskosität bei 25°C von ca. 1200 mPa.s, bestehend aus
60 Gew.-Teilen eines Polyethers der OH-Zahl 36, der durch Addition eines Gemischs aus 83 % Propylenoxid und 17 % Ethylenoxid an Trimethylolpropan erhalten worden ist.

Von vorstehend beschriebenem Polyether werden
80 Gew.-Teile mit
20 Gew.-Teilen eines Gemisches
bestehend aus
40 Gew.-Teilen Styrol und
60 Gew.-Teilen Acrylnitril "in situ" gepfropft.
10 Gew.-Teile Diethylenglykol
10 Gew.-Teile Dipropylenglykol
20 Gew.-Teile eines Polyethers der OH-Zahl 790, der durch Addition von 3,75 Mol Propylenoxid an Ethylendiamin erhalten wurde,
3 Gew.-Teile einer Paste bestehend aus 50 % Zeolith (Kalium/Natrium- Alumosilikat) und 50 % Rizinusöl
und
0,15 Gew.-Teile Dibutylzinndilaurat werden zu "Polyol I" vermischt.

### Isocyanat I

Polyisocyanat mit einem NCO-Gehalt von ca. 31,5 % und einer Viskosität bei 25°C von 200 mPa.s, hergestellt durch Phosgenierung von Anilin-Formaldehyd-Kondensaten.

Das Reaktionsgemisch aus
100 Gew.-Teilen Polyol I
97 Gew.-Teilen Isocyanat I
ergibt ein hartes und wärmestabiles PU-System mit einer Wärmeheständigkeit von ca. 110°C.

### Beispiel 2

Polyol I gemäß Beispiel 1.

### Isocyanat II

Ein Polyisocyanat/Polyether-Voraddukt (Prepolymer) mit einem NCO-Gehalt von ca. 20 % und einer Viskosität bei 25°C von ca. 1500 mPa.s,
bestehend aus
36 Gew.-Teilen eines Polyethers der OH-Zahl 36, der durch Addition eines Gemischs aus 83 % Propylenoxid und 17 % Ethylenoxid erhalten wurde.

Von diesem Polyether werden
80 Gew.-Teile mit
20 Gew.-Teilen eines Gemischs aus
40 Gew.-Teilen Styrol und
60 Gew.-Teilen Acrylnitril "in situ" gepfropft.

Vorstehender "SAN-gepfropfter Polyether" wird mit
64 Gew.-Teilen Isocyanat I zur Reaktion gebracht.

Das Reaktionsgemisch aus
100 Gew.-Teilen Polyol I
0,10 Gew.-Teilen Dibutylzinndilaurat und
150 Gew.-Teilen Isocyanat II
ergibt ein halbhartes, zäh-elastisches PU-System mit hoher Schlagfestigkeit.

### Beispiel 3

### Polyol II

Polyolgemisch der OH-Zahl 56 und einer Viskosität bei 25°C von 840 mPa.s, bestehend aus
91 Gew.-Teilen eines Polyethers der OH-Zahl 36, der durch Addition eines Gemisches aus 83 % Propylenoxid und 17 % Ethylenoxid an Trimethylolpropan erhalten worden ist,
0,9 Gew.-Teilen eines Polyethers der OH-Zahl 150, der durch Addition eines Gemisches aus 87 % Propylenoxid und 13 % Ethylenoxid an Propylenglykol erhalten wurde, und
0,9 Gew.-Teilen einer Lösung von Alkaliacetat in Diethylenglykol
werden zu "Polyol II" vereinigt.

### Isocyanat III

Ein Polyisocyanat-Gemisch mit einem NCO-Gehalt von 28 % und einer Viskosität bei 25°C von 300 mPa.s, bestehend aus
100 Gew.-Teilen eines Semiprepolymers, welches durch Umsetzung von
100 Gew.-Teilen eines Gemischs aus
80 Gew.-Teilen 4,4'-Diisocyanatodiphenylmethan,
10 Gew.-Teilen tri- und höherfunktionellen Polyisocyanaten der Diphenylmethanreihe mit
12,5 Gew.-Teilen Polypropylenglykol der OH-Zahl 485 erhalten wurde, mit einem NCO-Gehalt von 24.5 % und
100 Gew.-Teilen eines Polyisocyanates, das durch Phosgerierung von Anilin-Formaldehyd-Kondensaten hergestellt wurde und einen NCO-Gehalt von 31,5 % und eine Viskosität bei 25°C von 60 mPa.s aufweist.

Die Isocyanat-Kennzahl wird in dem nachfolgenden Beispiel durch Variation der Menge des Polyisocyanatgemischs eingestellt. 100 Gew.-Teile des Gemisch pro 100 Gew.-Teile Polyol II entsprechen einer Isocyanatkennzahl von 660; 200 Gew.-Teile pro 100 Gew.-Teile Polyol II einer Isocyanatkennzahl von 1330.

Das Reaktionsgemisch aus
100 Gew.-Teilen Polyol II
0 bis 2 Gew.-Teilen einer Lösung von Alkaliacetat in Diethylenglykol und
100 bis 200 Gew.-Teilen Isocyanat III
ergibt ein PIR-System, das sich über die Änderung der Gewichtsanteile (Kennzahl) von Isocyanat III von weich bis hart einstellen läßt und hochtemperaturstabil ist (> 200°C).

## Patentansprüche

1. Verfahren zum Herstellen von gewickelten Rohren (4) aus Kunststoff, wobei ein Band (16; 32; 67) aus Kunststoff unter einem Wickelwinkel α auf einen Zylinder (2; 62) aufgewickelt und die benachbarten Windungen (20; 31; 51, 52; 66) durch Ausgießen der dazwischen befindlichen Fuge (22; 33; 69) miteinander verbunden werden, dadurch gekennzeichnet, daß ein Polyurethan-Reaktionsgemisch (17) zur Bildung eines Kunststoffes auf einen linear bewegten Trägerfolienstreifen (7) aufgegossen wird und durch Aushärten das Band (16; 32; 67) bildet und daß die benachbarten Windungen (20; 31; 51, 52; 66) durch Ausgießen der Fuge (22; 33; 69) mit einem Polyurethan-Reaktionsgemisch (23; 36; 42) verbunden werden und daß das so gebildete Rohr (4) von dem Zylinder (2; 62) kontinuierlich abgestreift wird.

2. Verfahren nach Anspruch 1, dadurch gekennzeichnet, daß das Abstreifen des gebildeten Rohres vom Zylinder (4) durch in Abführrichtung entsprechend dem Wickelwinkel angestellte, gegen die zuletzt aufgebrachte Windung (20; 31; 51, 52; 66) drückende Führungen (18, 19) erfolgt.

3. Verfahren nach Anspruch 1 oder 2, dadurch gekennzeichnet, daß der Trägerfolienstreifen (7) mindestens auf der der Abführvorrichtung abgewandten Seite einen über die Breite des Bandes (16) hinausragenden Rand (13) aufweist.

4. Verfahren nach einem der Ansprüche 1 bis 3, dadurch gekennzeichnet, daß der Trägerfolienstreifen (7) seitlich trogartig hochgefaltet und das Polyurethan-Reaktionsgemisch (17) in den so gebildeten Trog (14) eingegossen wird und daß vor dem Aufwickeln des Bandes (16; 32; 67) der der Abführvorrichtung abgewandte Rand (13) flachgelegt und der in Abführrichtung weisende Rand (14) unter das gebildete Band (16; 32; 67) geklappt wird.

5. Verfahren nach einem der Ansprüche 1 bis 4, dadurch gekennzeichnet, daß der Trägerfolienstreifen (7) abgezogen wird, nachdem das Rohr (4) den Zylinder (2; 62;) verlassen hat.

6. Verfahren nach einem der Ansprüche 1 bis 5, dadurch gekennzeichnet, daß beim Ausgießen der Fuge (33) mit Hinterschneidungen (35) versehene Profile (34) eingebracht werden.

7. Verfahren nach einem der Ansprüche 1 bis 6, dadurch gekennzeichnet, daß mehrere Bänder übereinander aufgewickelt und die Fugen mit einem Polyurethan-Reaktionsgemisch ausgegossen werden.

8. Verfahren nach einem der Ansprüche 1, 2, 6 oder 7, dadurch gekennzeichnet, daß der Trägerfolienstreifen (7) als endloses Transportband (80) ausgebildet ist und auf dem Zylinder (72) als Trennfolie unterhalb der Fuge (84) des Bandes (82) ein Stahlband (75) mitgeführt wird.

9. Verfahren nach einem der Ansprüche 1 bis 8, dadurch gekennzeichnet, daß die Fugenmasse beim Ausgießen der Fuge (84) mittels konturgehender Hilfsmittel (78) mit Hinterschneidungen versehen wird.

10. Vorrichtung zum Herstellen von gewickelten Rohren (4) aus einem Band (16) aus Kunststoff durch Verbinden der Windungen (20; 31; 51, 52) dieses Bandes (16), bestehend aus einem mit einem Drehantrieb (1) versehenen Zylinder (2) mit Abführvorrichtung (18, 19) für das Rohr, dadurch gekennzeichnet, daß diesem Zylinder (2) eine Abwickelstation (6) für einen Trägerfolienstreifen (7) vorgeordnet und über dem Transportweg des Trägerfolienstreifens (7) eine Gießvorrichtung (15) für ein Polyurethan-Reaktionsgemisch (17) zur Erzeugung des Bandes (16) angeordnet ist und daß über dem Zylinder (2) eine weitere Gießvorrichtung (21) zum Ausgießen der Fuge (22) zwischen den Windungen (20; 31; 51, 52) angeordnet ist

11. Vorrichtung zum Herstellen von gewickelten Rohren aus einem Band (67) aus Kunststoff durch Verbinden der Windungen (66) dieses Bandes (67), bestehend aus einem Zylinder (62) mit einer Abführvorrichtung, gekennzeichnet durch einen feststehenden Zylinder (62) mit einer Unterbrechung (64) seines Mantels (63), wobei in der Unterbrechung (64) eine auf die Windungen (66) dieses Bandes (67) einwirkende Antriebsrolle (65) angeordnet ist, sowie durch eine dem Zylinder (62) vorgeordnete Abwickelstation für einen Trägerfolienstreifen und eine Gießvorrichtung für ein Polyurethan-Reaktionsgemisch zur Erzeugung des Bandes (67) über dem Transportweg des Trägerfolienstreifens sowie durch eine weitere Gießvorrichtung über dem Zylinder (62) zum Ausgießen der Fuge (69) zwischen den Windungen (66).

12. Vorrichtung zum Herstellen von gewickelten Rohren aus einem Band (81) aus Kunststoff durch Verbinden der Windungen (85) dieses Bandes (81), bestehend aus einem Zylinder (72) mit einer Abführvorrichtung, gekennzeichnet durch einen feststehenden Zylinder (72) mit zwei Öffnungen (74, 76) in seinem Mantel (73) zum Ausführen und Einführen eines endlosen angetriebenen Stahlbandes (75), das den Zylinder (72) mit mindestens einer Windung (77) umschlingt, sowie durch ein dem Zylinder (72) vorgeordnetes endloses Transportband (80), über dem eine Gießvorrichtung für ein Polyurethan-Reaktionsgemisch zur Erzeugung des Bandes (81) angeordnet ist, sowie durch eine weitere Gießvorrichtung (79) über dem Stahlband (75) zum Ausgießen der Fuge (89) zwischen den Windungen (85) des Bandes (82).

## Claims

1. A process for the production of wound tubes (4) of plastic, in which a strip of plastic (16; 32; 67) is wound at a winding angle α onto a cylinder (2; 62) and the adjacent windings (20; 31; 51, 52; 66) are bonded together by filling the joint between them (22; 33; 69), characterized in that a polyurethane reaction mixture (17) for forming a plastic is cast on a linearly moving supporting film tape (7) and by curing forms the strip (16; 32; 67), and that the adjacent windings (20; 31; 51, 52; 66) are bonded by filling the joint (22; 33; 69) with a polyurethane reaction mixture (23; 36; 42) and that the tube (4) so formed is continuously stripped from the cylinder (2; 62).

2. A process according to Claim 1, characterized in that the tube formed is stripped from the cylinder (4) by guides (18; 19) positioned in the take-off direction in accordance with the winding angle and pressing against the last applied winding (20; 31; 51, 52; 66).

3. A process according to Claim 1 or 2, characterized in that the supporting film tape (7) has, at least on the side facing away from the take-off direction, an edge (13) projecting beyond the width of the strip (16).

4. A process according to one of Claims 1 to 3, characterized in that the supporting film tape (7) is folded up at the sides like a trough and the polyurethane reaction mixture (17) is cast in the trough (14) so formed, and that before the strip (16; 32; 67) is wound on, the edge (13) facing away from the take-off direction is laid flat and the edge (14) facing in the take-off direction is folded under the strip formed (16; 32; 67).

5. A process according to one of Claims 1 to 4, characterized in that the supporting film tape (7) is peeled off after the tube (4) has left the cylinder (2; 62).

6. A process according to one of Claims 1 to 5, characterized in that during the filling of the joint (33), profiles (34) provided with undercuts (35) are inserted.

7. A process according to one of Claims 1 to 6, characterized in that several strips are wound on over each other and the joints are filled with a polyurethane reaction mixture.

8. A process according to one of Claims 1, 2, 6 or 7, characterized in that the supporting film tape is in the form of a continuous conveyor belt (80) and a steel strip (75) is carried along onto the cylinder (72) as separating film below the joint (84) of the steel strip (82).

9. A process according to one of Claims 1 to 8, characterized in that during the filling of the joint (84), the jointing material is provided with undercuts by means of auxiliary shaping devices (78).

10. An apparatus for the production of wound tubes (4) from a strip (16) of plastic by bonding the windings (20; 31; 51, 52) of this strip (16), consisting of a cylinder (2) provided with a rotary drive (1) with take-off device (18, 19) for the tube, characterized in that an unwinding station (6) for a supporting film tape (7) is arranged before this cylinder (2), a casting device (15) for a polyurethane reaction mixture (17) for the production of the strip (16) is arranged over the transport path of the supporting film tape (7), and another casting device (21) for filling the joint (22) between the windings (20; 31; 51, 52) is arranged over the cylinder (2).

11. An apparatus for the production of wound tubes from a strip (67) of plastic by bonding the windings (66) of this strip (67), consisting of a cylinder (62) with a take-off device, characterized by a stationary cylinder (62) with an opening (64) in its shell (63), a friction roller (65) which acts on the windings (66) of this strip (67) being arranged in the opening (64), as well as by an unwinding station for a supporting film tape arranged before the cylinder (62) and a casting device for a polyurethane reaction mixture for the production of the strip (67) over the transport path of the supporting film tape, and by another casting device over the cylinder (62) for filling the joint (69) between the windings (66).

12. An apparatus for the production of wound tubes from a strip (81) of plastic by bonding the windings (85) of this strip (81), consisting of a cylinder (72) with a take-off device, characterized by a stationary cylinder (72) with two openings (74, 76) in its shell (73), for the taking-off and introduction of a continuous driven steel strip (75), that winds round the cylinder (72) with at least one winding (77), as well as by a continuous conveyor belt (80) arranged before the cylinder (72), a casting device for a polyurethane mixture for the production of the strip (81) being arranged over the continuous conveyor belt (80), as well as by a further casting device (79) over the steel strip (75) for filling the joint (89) between the windings (85) of the strip (82).

## Revendications

1. Procédé de fabrication de tubes enroulés (4) en matière plastique, dans lequel une bande (16 ; 32 ; 67) en matière plastique est enroulée sur un cylindre (2 ; 62) sous un angle d'enroulement α et les tours voisins (20 ; 31 ; 51, 52 ; 66) sont reliés entre eux par scellement du joint (22 ; 33 ; 69) situé entre eux, caractérisé en ce qu'un mélange réactionnel de polyuréthane (17) pour la formation d'une matière plastique est coulé sur un ruban de feuille support (7) déplacé linéairement et la bande (16 ; 32 ; 67) est formée par durcissement, et en ce que les tours voisins (20 ; 31 ; 51, 52 ;66) sont reliés par scellement du joint (22 ; 33 ; 69) avec un mélange réactionnel de polyuréthane (23 ; 36 ; 42) et en ce que le tube (4) ainsi formé est séparé en continu du cylindre (2 ; 62).

2. Procédé selon la revendication 1, caractérisé en ce que la séparation du tube formé d'avec le cylindre (4) est réalisée par des guides (18, 19) disposés dans la direction de retrait en fonction de l'angle d'enroulement, qui appuient contre le tour (20 ; 31 ;51, 52 ; 66) appliqué en dernier lieu.

3. Procédé selon la revendication 1 ou 2, caractérisé en ce que le ruban de feuille support (7) comporte au moins sur le côté opposé à la direction de retrait un bord (13) qui fait saillie de la largeur de la bande (16).

4. Procédé selon l'une des revendications 1 à 3, caractérisé en ce que le ruban de feuille support (7) est replié vers le haut latéralement en forme d'auge et le mélange réactionnel de polyuréthane (17) est coulé dans l'auge (14) ainsi formée et en ce que, avant l'enroulement de la bande (16 ; 32 ; 67), le bord (13) opposé au dispositif de retrait est aplati et le bord (14) tourné dans la direction de retrait est rabattu sous la bande (16 ; 32 ; 67) formée.

5. Procédé selon l'une des revendications 1 à 4, caractérisé en ce que le ruban de feuille support (7) est retiré après que le tube (4) a quitté le cylindre (2 ; 62).

6. Procédé selon l'une des revendications 1 à 5, caractérisé en ce que des profilés (34) munis de contre-dépouilles (35) sont fixés lors du scellement du joint (33).

7. Procédé selon l'une des revendications 1 à 6, caractérisé en ce que plusieurs bandes sont enroulées les unes sur les autres et les joints sont scellés avec un mélange réactionnel de polyuréthane.

8. Procédé selon l'une des revendications 1, 2, 6 ou 7, caractérisé en ce que le ruban de feuille support (7) est sous forme d'une bande transporteuse sans fin (80) et en ce qu'une bande d'acier (75) est entraînée sur le cylindre (72) sous forme de feuille de séparation sous le joint (84) de la bande (82).

9. Procédé selon l'une des revendications 1 à 8, caractérisé en ce que, lors du scellement du joint (84), la masse du joint est munie de contre-dépouilles au moyen d'auxiliaires (78) donnant un contour.

10. Dispositif de fabrication de tubes enroulés (4) à partir d'une bande (16) en matière plastique par liaison des tours (20 ; 31 ; 51, 52) de cette bande (16), consistant en un cylindre (2) muni d'un dispositif d'entraînement en rotation (1) avec un dispositif de retrait (18, 19) pour le tube, caractérisé en ce qu'un poste dérouleur (6) pour un ruban de feuille support (7) est disposé en amont de ce cylindre (2) et en ce qu'un dispositif de coulée (15) pour un mélange réactionnel de polyuréthane (17) pour produire la bande (16) est disposé au-dessus de la voie de transport du ruban de feuille support (7), et en ce qu'un autre dispositif de coulée (21) pour le scellement du joint (22) entre les tours (20 ; 31 ; 51, 52) est disposé; au-dessus du cylindre (2).

11. Dispositif de fabrication de tubes enroulés à partir d'une bande (67) en matière plastique par liaison des tours (66) de cette bande (67), consistant en un cylindre (62) avec d'un dispositif de retrait, caractérisé par un cylindre fixe (62) comportant une interruption (64) de son enveloppe (63), un galet d'entraînement (65) agissant sur les tours (66) de cette bande (67) étant disposé dans l'interruption (64), ainsi que par un poste dérouleur disposé en amont du cylindre (62) pour un ruban de feuille support et un dispositif de coulée pour un mélange réactionnel de polyuréthane pour la production de la bande (67) au-dessus de la voie de transport du ruban de feuille support et par un autre dispositif de coulée au-dessus du cylindre (62) pour le scellement du joint (69) entre les tours (66).

12. Dispositif de fabrication de tubes enroulés à partir d'une bande (81) en matière plastique par liaison des tours (85) de cette bande (81), consistant en un cylindre (72) avec un dispositif de retrait, caractérisé par un cylindre fixe (72) comportant deux ouvertures (74, 76) dans son enveloppe (73) pour la sortie et l'entrée d'une bande d'acier (75) sans fin entraînée, qui entoure le cylindre (72) par au moins un tour (77), ainsi que par une bande transporteuse sans fin (80) disposée en amont du cylindre (72) au-dessus de laquelle est disposé un dispositif de coulée pour un mélange réactionnel de polyuréthane pour la production de la bande (81), ainsi que par un autre dispositif de coulée (79) au-dessus de la bande d'acier (75) pour le scellement du joint (89) entre les tours (85) de la bande (82).
